Europäisches Patentamt

European Patent Office

Office européen des brevets

(11) Veröffentlichungsnummer : **0 063 303**
**B1**

(12) # EUROPÄISCHE PATENTSCHRIFT

(45) Veröffentlichungstag der Patentschrift :
18.09.85

(51) Int. Cl.⁴ : **A 23 B  4/12**

(21) Anmeldenummer : **82102897.4**

(22) Anmeldetag : **05.04.82**

---

(54) **Verfahren zum Herstellen von Rohpökelware.**

---

(30) Priorität : **13.04.81 DE 3114913**

(43) Veröffentlichungstag der Anmeldung :
**27.10.82 Patentblatt 82/43**

(45) Bekanntmachung des Hinweises auf die Patenterteilung : **18.09.85 Patentblatt 85/38**

(84) Benannte Vertragsstaaten :
**AT BE CH FR IT LI NL**

(56) Entgegenhaltungen :
**DE-A- 3 008 282**
**FR-A- 2 163 504**
**US-A- 4 238 513**
**Die Akte enthält technische Angaben, die nach dem
Eingang der Anmeldung eingereicht wurden und die
nicht in dieser Patentschrift enthalten sind.**

(73) Patentinhaber : **Karl Müller & Co.**
**Klagenfurter Strasse 1-3**
**D-7000 Stuttgart 30 (DE)**

(72) Erfinder : **Rieck, Horst**
**Spitzäckerstrasse 22**
**D-7000 Stuttgart 30 (DE)**

(74) Vertreter : **Patentanwälte Phys. Bartels Dipl.-Ing. Fink
Dr.-Ing. Held
Lange Strasse 51
D-7000 Stuttgart 1 (DE)**

EP 0 063 303 B1

## Beschreibung

Die Erfindung betrifft ein Verfahren zum Herstellen von Rohpökelware, bei dem das frische Fleisch beim Pökeln mit Bakterienkulturen geimpft wird.

Bei den üblichen Pökelverfahren von Rohpökelwaren, z. B. von Schinken, Bauchfleisch, Rinderschinken, Lachsschinken od. dgl., werden die Fleischstücke mit einer Pökelmischung behandelt, die zum Umröten Nitrat und/oder Nitrit und zum Entziehen von Wasser verhältnismäßig hohe Kochsalzmengen enthält. Hierbei spielt der pH-Wert des Fleisches eine große Rolle. Hat das Fleisch pH-Werte über 5, 8 bis 6,0, dann werden die durch die Pökelmischung zugeführten Salze vom Fleisch nur langsam aufgenommen. Auch gibt das Fleisch dann nur schwer Wasser ab.

Bei einer aus Fleisch mit höheren pH-Werten hergestellten Pökelware ist die durch das Pökeln erzielte Farbe nicht stabil. Auch ist eine solche Ware weniger haltbar, zäh im Biß und hat verhältnismäßig wenig Aroma.

Zur Verbesserung von Farbe und Geschmack werden beim Pökeln nitratreduzierende Starterkulturen zugesetzt. Da jedoch aus hygienischen Gründen in der Regel bei Temperaturen von 6°-10 °C gepökelt wird, werden nitratreduzierende Bakterien benötigt, die in diesem Temperaturbereich aktiv sind. Hierzu haben sich bisher Mikrokokken oder apathogene Staphylokokken bewährt. Diese Keime haben jedoch den Nachteil, daß sie nur schwach säuernd sind und deshalb den pH-Wert-Verlauf des Fleisches während des Pökelprozesses nur sehr wenig beeinflussen. Um daher eine einwandfreie Rohpökelware herstellen zu können, kann hierzu nach den bekannten Verfahren nur Fleisch mit einem unter 6,0 liegenden pH-Wert verwendet werden.

Es wurden auch schon Versuche unternommen, Fleisch mit milchsäurebildenden Bakterien zu beimpfen, die den pH-Wert stark herabsetzen. Bei den mit dieses Bakterien durchgeführten Versuchen wurde das Pökeln bei Temperaturen von über 20 °C durchgeführt. Die hierbei hergestellte Pökelware hatte jedoch eine sehr unbefriedigende blasse Farbe und einen unbefriedigenden Geschmack, so daß hieraus der Schluß gezogen wurde, daß milchsäurebildende Bakterien beim Pökeln von Rohpökelware ungeeignet sind.

Durch die US-A-40 238 513 ist ein Verfahren zum Herstellen von trockener oder halbtrockener Wurst bekannt, bei dem als Starterkulturen Milchsäurebakterien, nämlich Pediococcus pentosaceus und Pediococcus cerevisiae verwendet werden. Das zum Herstellen der Wurst verwendete Brät besteht jedoch aus gemahlenem Fleisch, das bei der Impfung mit den Bakterienkulturen gemischt wird. Dadurch kommt eine sehr große Fläche des Fleisches, nämlich die Summe der Oberflächen aller Fleischpartikelchen, mit den Bakterienkulturen in Berührung, so daß bei diesem bekannten Verfahren ganz andere Verhältnisse vorliegen als bei einem Verfahren zum Herstellen roh gepökelter Fleischstücke. Obwohl in dieser Druckschrift erwähnt ist, daß mit Pediococcus pentosaceus eine Fermentation im Temperaturbereich von 10° bis 27 °C möglich sei, wird dort auch bei über 20 °C liegenden Temperaturen, nämlich bei 25 °C geimpft (Spalte 4, Zeile 25), wobei die bei dem bekannten Verfahren zum Herstellen rohgepökelter Fleischstücke als Ausgangsmaterial ein Brät mit einem pH-Wert unter 6,0 verwendet wird (Tabelle in Spalte 4).

Der Erfindung liegt die Aufgabe zugrunde, ein neues Verfahren zum Herstellen von rohgepökelten Fleischstücken anzugeben, bei dem auch aus Frischfleisch mit ab 6,0 liegenden pH-Werten eine einwandfreie Rohpökelware herstellbar ist.

Diese Aufgabe ist durch die im Patentanspruch 1 genannten Verfahrensschritte gelöst. Die gemäß der Erfindung verwendeten milchsäurebildenden Bakterienkulturen haben bei der Lagerung bei Temperaturen unter 10 °C eine so starke Vitalität, daß sie andere schädliche Bakterien verdrängen und so die hygienischen Voraussetzungen mit Sicherheit erfüllen. Gleichzeitig wird dadurch erreicht, daß bei diesen niedrigen Temperaturen der pH-Wert des Fleisches stark herabgesetzt wird. Die durch die Milchsäurebakterien verursachte Säuerung und Verdrängung von anderen Bakterien wirkt sich auch vorteilhaft bei der Umrötung und Stabilisierung der nach dem erfinderischen Verfahren hergestellten Rohpökelware aus.

Die Erfindung ist in dem folgenden Ausführungsbeispiel im einzelnen erläutert.

Vier verschiedene Hinterschinken vom Schwein wurden ohne Knochen nach Schwarzwälder Art mit anhaftender Schwarte in Stücke zerteilt. Das Stückgewicht betrug 7,25 bis 7,80 kg.

Diese Schinkenstücke wurden in einer Pökellake, die

100 g Wasser

8 kg Nitritpökelsalz (= 0,5 % $NaNO_2$ + 99,5 % NaCl)

6 kg Dextrose

20 g eines Konzentrats des Stammes pediococcus pentosaceus mit 150 Milliarden Keimen je ml in tiefgefrorener flüssiger Basis

naß gepökelt. Hierbei wurde in einem Pökelbehälter je kg Schinkengewicht 1 kg Pökellake gegeben. Die Temperatur der Naßpökelung betrug 14 °C bis 16 °C, die Pökeldauer etwa 4 Tage (je kg Gewicht des Einzelschinkens 1/2 Tag).

Der Stamm der milchsäurebildenden Starterkultur pediococcus pentosaceus vermehrt sich bereits bei etwa 8,5 °C.

Anschließend wurde die Trockensalzung durchgeführt, bei der die Schinkenstücke je kg mit 30 bis 40 g Nitritpökelsalz eingerieben und zusammen in einen Behälter gepackt wurden.

Nach 4 Tagen Lagerung wurden die Schinkenstücke nochmals mit 10 bis 20 g Nitritpökelsalz eingerieben und im Behälter umgeschichtet. Die Lagertemperatur betrug 8 °C bis 10 °C, die Lagerdauer 10 Tage.

Nach der Trockensalzung wurden die Pökelstücke nochmals in eine 4 %ige Nitritpökelsalzlake für 4 Tage bei 8 °C bis 10 °C gelagert. Danach wurden die Schinkenstücke 2 bis 3 Wochen lang im Kaltrauch bei genügend Luftfeuchtigkeit von etwa 20 °C getrocknet.

In dem beiliegenden Diagramm sind die pH-Werte des im oben genannten Beispiel benutzten Frischfleisches und der fertigen Rohpökelware angegeben. Die einzelnen Schinkenstücke sind mit den römischen Ziffern I, II, III und IV bezeichnet. Das Stück I bestand aus Oberschale und Nuß, die Stücke II und III aus Unterschale bzw. Oberschale und das Stück IV aus Unterschale und Nuß.

Das Diagramm zeigt, daß der pH-Wert des verwendeten Frischfleisches bei den verschiedenen Stücken und den verschiedenen Teilen bei den Werten 6,0 bis einschließlich 6,55 lag. Die pH-Werte der fertig gepökelten, gerauchten und getrockneten Stücke lagen bei 5,45 für die Oberschale des Stückes I bis einschließlich 5,71 für die Unterschale des Stückes IV, also immer unter 5,8. Das Beispiel zeigt also, daß durch das erfindungsgemäße Verfahren Frischfleisch mit verhältnismäßig ungünstigen, bei 6,0 und mehr liegenden pH-Werten verwendet werden kann und trotzdem eine fertige Rohpökelware erreicht wird, bei der der pH-Wert unter 5,8 liegt. Außerdem zeigt das Beispiel, daß auch bei sich um 0,55 unterscheidenden Ausgangswerten der pH-Werte die pH-Werte der fertigen Pökelware sich nur um 0,26 unterscheiden. Dies hat auch zur Folge, daß die Umrötung und Farbstabilität bei allen Schinkenstücken gleichmäßig gut war. Auch wies der Geschmack aller erfindungsgemäß gepökelten Fleischstücke ein ausgeprägtes Fermentationsaroma auf und der Biß der Ware war in allen Fällen zart.

Der oben genannte Bakterienstamm pediococcus pentosaceus ist nur einer von vielen milchsäurebildenden Stämmen, die sich schon unter 12 °C zu vermehren beginnen und sich daher auch gut für das erfindungsgemäße Verfahren eignen.

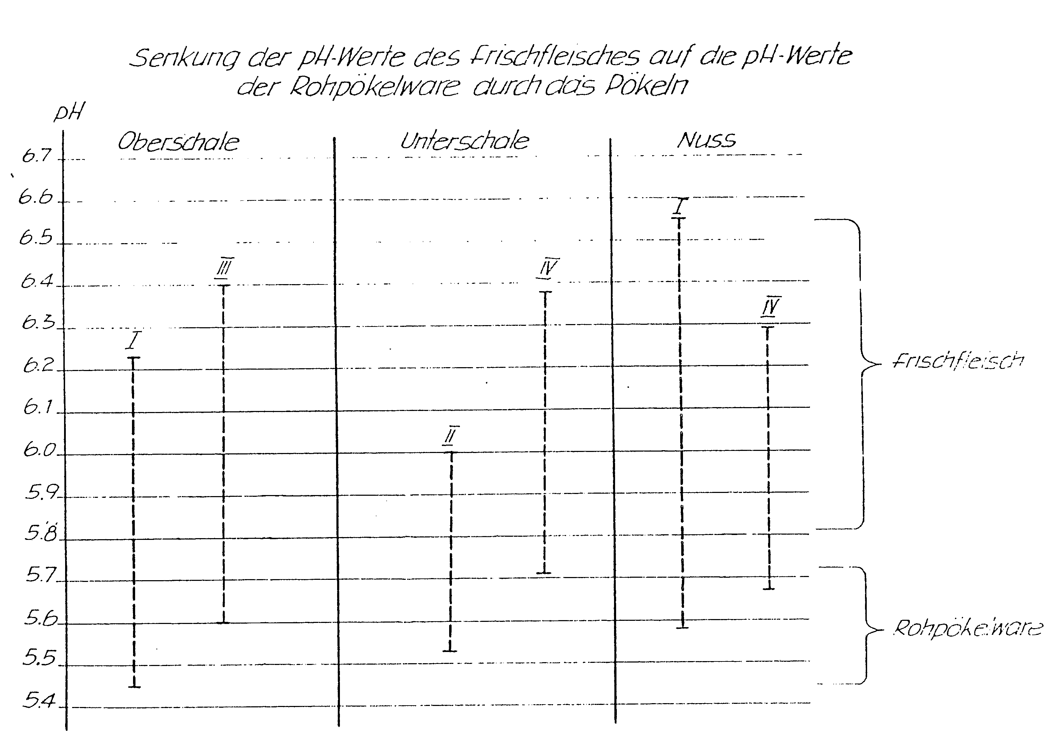

## Patentansprüche

1. Verfahren zum Herstellen von rohgepökelten Fleischstücken, bei dem das frische Fleisch beim Pökeln mit milchsäurebildenden Bakterienkulturen geimpft und bei einer anschließenden Lagerung bei vorgegebenen Temperaturen der pH-Wert des Fleisches durch die Wirkung der Bakterien gesenkt wird, dadurch gekennzeichnet, daß die Fleischstücke mit ab 6,0 liegenden pH-Werten mit milchsäurebildenden Bakterienkulturen geimpft werden, die sich schon bei Temperaturen unter 12 °C vermehren, und daß das an die Impfung anschließende Lagern bei Temperaturen von nicht mehr als 10 °C mindestens so lange durchgeführt wird, bis der pH-Wert des Fleisches auf einen Wert unter 5,8 abgesunken ist.

2. Verfahren nach Anspruch 1, dadurch gekennzeichnet, daß das frische Fleisch bei einer Temperatur unter 20 °C in einer Nitritpökelsalz und Dextrose enthaltenden Pökellake naß gepökelt wird, der mindestens 0,1 ‰ der Bakterienkultur beigemischt wird, die mindestens 20 Milliarden Keime je ml der Kultur in tiefgefrorener Basis enthält, daß anschließend die Fleischstücke mindestens einmal mit Nitritpökelsalz trocken gesalzen und pro kg des Einzelstückes einen halben Tag in Behältern gelagert und anschließend einige Wochen getrocknet werden.

3. Verfahren nach Anspruch 2, dadurch gekennzeichnet, daß die Naßpökelung bei Temperaturen unter 16 °C durchgeführt wird.

4. Verfahren nach einem der Ansprüche 1-3, dadurch gekennzeichnet, daß als milchsäurebildende Bakterienkulturen eine Kultur des Stammes pediococcus pentosaceus verwendet wird.

## Claims

1. A process for the production of raw pickled pieces of meat in which the fresh meat is inoculated during the curing process with lactic acid producing bacteria cultures and in which the pH-value of the meat is lowered by the action of the said bacteria at a subsequent storage step at predetermined temperatures, characterized in that the meat pieces with a pH-value from 6.0 upwards are inoculated with lactic acid producing bacteria cultures which begin to propagate already at temperatures of less than 12 °C, and in that the storage following the inoculation at not more than 10 °C is maintained at least until the pH-value of the meat has dropped to a value of less than 5.8.

2. A process according to claim 1, characterized in that the fresh meat is pickle cured in a pickle containing nitrite pickling salt and dextrose at a temperature of less than 20 °C, to which pickle at least 0.1 ‰ of the bacteria culture is admixed, the bacteria culture containing at least 20 million viable cells per ml of the culture in a deep-frozen condition, and in that subsequently the meat pieces are dry-salted at least once with nitrite pickling salt and stored in containers at the rate of half a day per kg of individual pieces and then are dried for several weeks.

3. A process according to claim 2, characterized in that the pickle curing being carried out at temperatures of less than 16 °C.

4. A process according to claims 1-3, characterized in that as lactic acid producing bacteria cultures a culture of pediococcus pentosaceus being used.

**Revendications**

1. Procédé de fabrication de morceaux de viande crus salés, dans lequel on inocule à la viande fraîche, lors de la salaison, des cultures de bactéries formant de l'acide lactique et, dans un stockage ultérieur, la valeur de pH de la viande est réduite, à des températures prédéterminées, par l'action des bactéries, caractérisé en ce qu'on inocule dans les morceaux de viande des cultures de bactéries formant de l'acide lactique et ayant des valeurs de pH partant de 6,0 de manière qu'elles se multiplient déjà à des températures inférieures à 12 °C, et en ce que le stockage effectué à la suite de l'inoculation est réalisé à des températures non supérieures à 10 °C dans un temps minimum nécessaire à ce que la valeur de pH de la viande diminué jusqu'à une valeur inférieure à 5,8.

2. Procédé selon la revendication 1, caractérisé en ce que la viande fraîche est salée par voie humide à une température inférieure à 20 °C dans une saumure contenant un sel de nitrite et de la dextrose et auquel on a mélangé au moins 0,1 ‰ de la culture de bactéries, qui contient au moins 20 milliards de germes par ml de la culture dans une base congelée, en ce qu'ensuite les morceaux de viande sont salés par voie sèche au moins une fois au moyen d'un sel de nitrite et sont stockés, par kg du morceau individuel, pendant une demi-journée dans des récipients et sont ensuite séchés pendant quelques semaines.

3. Procédé selon la revendication 2, caractérisé en ce que la salaison par voie humide est effectuée à des températures inférieures à 16 °C.

4. Procédé selon une des revendications 1 à 3, caractérisé en ce qu'on utilise comme cultures de bactéries génératrices d'acide lactique une culture de la souche pediococcus pentosaceus.

Senkung der pH-Werte des Frischfleisches auf die pH-Werte der Rohpökelware durch das Pökeln